# EUROPÄISCHE PATENTANMELDUNG

(11) **EP 0 620 190 A1**
(43) Veröffentlichungstag der Anmeldung: **19.10.1994**
(21) Anmeldenummer: 94102131.3
(22) Anmeldetag: 11.02.1994
(51) Int. Cl.: C02F 1/52, C02F 1/56

(54) **Fäll- und Flockungsmittel**

(30) Priorität: 15.04.1993 DE 4312290
(71) Anmelder: Degussa Aktiengesellschaft, D-60311 Frankfurt (DE)
(72) Erfinder: Glaum, Holger, Dr., D-63796 Kahl (DE); Leonhardt, Wolfgang, Dr., D-60314 Frankfurt (DE); Meier, Karl, D-53347 Alfter (DE)

(57) **Zusammenfassung**

Fäll- und Flockungsmittel mit der Zusammensetzung

| | |
|---|---|
| Zeolith A | 20 bis 80 Gew.-% |
| Kieselgur | 5 bis 40 Gew.-% |
| Aluminiumsulfat | 5 bis 50 Gew.-% |
| Bentonit | 0 bis 30 Gew.-% |
| Feststoffpolymer | 0 bis 10 Gew.-%. |

Es kann hergstellt werden, indem man die einzelnen Komponenten miteinander vermischt und gegebenenfalls verpreßt.

Es wird zum Reinigen von Abwässern der oberflächenbearbeitenden Industrie sowie zum Entfernen von Schwermetallionen eingesetzt.

## Beschreibung

Die Erfindung betrifft ein Fäll- und Flockungsmittel zum Entfernen von Schwermetallen aus den Abwässern der oberflächenverarbeitenden Industrie.

Schwermetallhaltige Abwässer der oberflächenverarbeitenden Industrie fallen beispielsweise in Form von Entfetter-, Entzunderungs-, Beiz- oder Dekapierlösungen, Chromatier- und Färbebädern oder chemische Metallegierungsbädern an.

Aufgrund eines neuen Gesetzes darf in den Abwässern der oberflächenverarbeitenden Industrie der Anteil an Schwermetallionen einen festgelegten Grenzwert nicht überschreiten. Schwermetallionen sind im Sinne des Gesetzes unter anderem die folgenden Ionen:
Al³⁺, Fe³⁺, Zn²⁺, Sn²⁺, P, Pb²⁺, Cr³⁺, Cu²⁺, Ni²⁺, Cd²⁺, Cr⁶⁺, Ag⁺, As, Se und Hg.

Aus der US-PS 4,765,908 ist ein Mittel zum Entfernen von Schwermetallen aus Abwässern mit der Zusammensetzung
a) Montmorillonit
b) Bentonit
c) Flockungsmittel
d) Alkali- oder Erdalkalicarbonat
e) Zirkonoxid
f) wenigstens ein Polyelektrolyt
bekannt.

Aus der EP-B 0 056 068 ist es bekannt, bei der Entfernung von Schwermetallionen aus Abwässern durch Fällung neben den bekannten polymeren Flockungsmitteln und den bekannten Fällungsmitteln ein Alkalialumosilikat, wie zum Beispiel Zeolith A, einzusetzen. Als bekanntes polymeres Flockungsmittel werden dabei hochpolymere Acrylpolymere und als bekannte Fällungsmittel werden Aluminium- oder Eisensulfat bzw. Alkalisilikate eingesetzt.

Die bekannten Mittel zur Abwasserbehandlung weisen den Nachteil auf, daß sie aufgrund ihrer pulverförmigen Struktur stark stauben.

Gegenstand der Erfindung ist ein Fäll- und Flockungsmittel, welches die folgende Zusammensetzung aufweist:

| | |
|---|---|
| Zeolith A | 20 bis 80 Gew.-%, bevorzugt 25 bis 60 Gew.-% |
| Kieselgur | 5 bis 40 Gew.-%, bevorzugt 20 bis 35 Gew.-% |
| Aluminiumsulfat | 5 bis 50 Gew.-%, bevorzugt 10 bis 30 Gew.-% |
| Bentonit | 0 bis 30 Gew.-%, bevorzugt 0 bis 15 Gew.-% |
| Feststoffpolymer | 0 bis 10 Gew.-%, bevorzugt 0,2 bis 2 Gew.-% |

Das Fäll- und Flockungsmittel kann als Pulver und in einer bevorzugten Ausführungsform als Granulat vorliegen.

Ein weiterer Gegenstand der Erfindung ist ein Verfahren zur Herstellung des Fäll- und Flockungsmittels, welches dadurch gekennzeichnet ist, daß man die Komponenten Zeolith A, Kieselgur, Aluminiumsulfat und gegebenenfalls Bentonit und Feststoffpolymer miteinander trocken vermischt und gegebenenfalls verpreßt.

Das Verpressen kann bevorzugt zu Granulaten erfolgen. Dabei können bekannte Verfahren und Vorrichtungen eingesetzt werden.

Das erfindungsgemäße Mittel kann in einer Menge von 0,1 bis 0,5 kg / m³ Abwasser eingesetzt werden. Es ist in bestehenden Neutralisierungsanlagen ohne zusätzlichen apparativen Aufwand dosierbar. Die Reaktionszeit beträgt ca. 1 Stunde.

Das erfindungsgemäße Fäll- und Flockungsmittel kann vorteilhafterweise zum Reinigen der Abwässer der oberflächenverarbeitenden Industrie von Schwermetallionen bei der Hydroxidfällung eingesetzt werden. In diesen Industriezweig fallen Galvaniken, Beizereien, Anodisierbetriebe, Brünierereien, Verzinkereien, Härtereien, Leiterplattenhersteller, Batteriehersteller, Emaillierbetriebe und mechanische Werkstätten.

Die besonderen Vorteile des erfindungsgemäßen Mittels liegen in der erzielbaren niedrigeren Restionenkonzentration an Schwermetallionen, der Verbesserung der Verpreßbarkeit der Schlämme sowie der Senkung des CSB-Wertes.

Das erfindungsgemäße Fäll- und Flockungsmittel hat aufgrund seiner Granulatform einen niedrigen Staubgehalt und ein Schüttgewicht von 650 bis 800 g/l. Daraus resultiert eine bessere Dosierbarkeit aus Dosieranlagen, die einen großen Vorrat an Fäll- und Flockungsmittel enthalten müssen.

Das erfindungsgemäße Fäll- und Flockungsmittel kann in seiner Granulatform direkt in die Neutralisationsstufe der Abwasserbehandlung dosiert werden. Es beeinflußt neben seiner Ionenaustauschleistung auch Parameter, wie die Filtrierbarkeit und die Verpreßbarkeit der Filtermasse, positiv. Es stellt eine Ergänzung in Bereichen der Abwasserbehandlung, bei denen eine Reinigung mittels Ionenaustauscher nicht möglich ist, dar. Es ermöglicht eine Senkung des CSB-Wertes durch die Einbindung organischer Verunreinigungen.

### Beispiele

In den Beispielen wird ein erfindungsgemäß granuliertes Fäll- und Flockungsmittel eingesetzt. Es weist die Zusammensetzung
45 Gew.-% Zeolith A
25 Gew.-% Kieselgur
20 Gew.-% Aluminiumsulfat
10 Gew.-% Bentonit
0,3 Gew.-% Feststoffpolymer
auf.

Als Zeolith A wird ein Zeolith-A-Pulver eingesetzt, das gemäß DE-A 26 51 485 hergestellt wurde und das dort beschriebene Teilchenspektrum aufweist.

Als Feststoffpolymer wird Polyacrylat eingesetzt.

### Beispiel 1

Ein Abwasser mit einem Gehalt an
Cu 0,6 mg/l
Zn 0,6 mg/l
Ni 0,2 mg/l
wird mit dem erfindungsgemäßen Fäll- und Flockungsmittel, das in Pulverform eingesetzt wird, in einer Menge von 0,3 kg/m³ Abwasser behandelt.

Danach weist das Abwasser einen Gehalt an
Cu 0,2 mg/l
Zn 0,4 mg/l
Ni 0,1 mg/l
auf.

### Beispiel 2

Ein Zinkionen enthaltendes Abwasser enthält zwischen 4,0 und 5,0 mg Zn/l. Nach der Behandlung mit dem erfindungsgemäßen Fäll- und Flockungsmittel, das in Pulverform in einer Menge von 0,2 kg/l eingesetzt wird, enthält das Abwasser 2,0 bis 2,5 mg Zn/l.

Nach der Behandlung mit dem erfindungsgemäßen Fäll-und Flockungsmittel, das in Granulatform in einer Menge von 0,35 kg/l eingesetzt wird, enthält dasselbe Zinkionen enthaltende Abwasser 1,0 bis 1,5 mg Zn/l.

Die Wirksamkeit des erfindungsgemäßen Fäll- und Flockungsmittels wird in den Beispielen 3 bis 5 bzw. in den Zeichnungen dargestellt. Es zeigen:

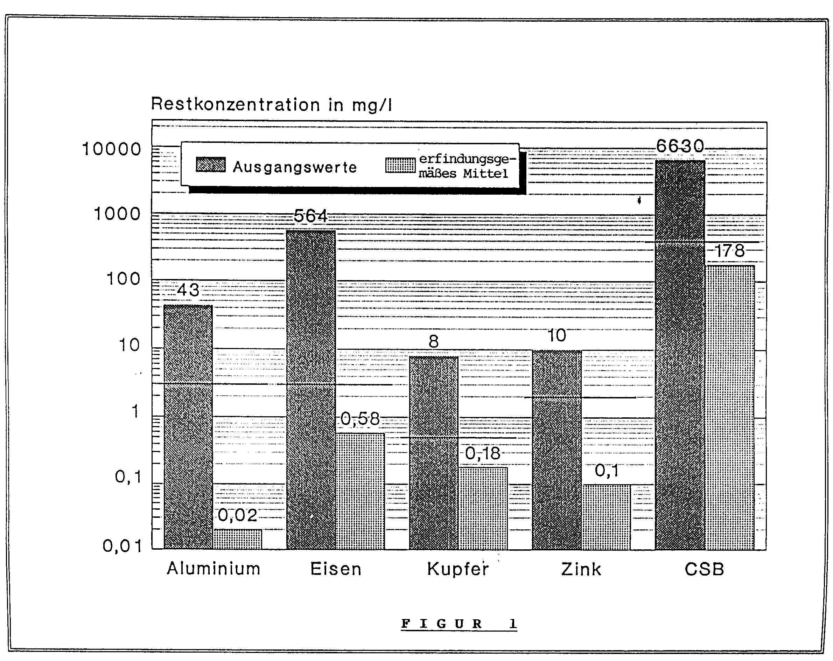

- Figur 1:: Behandlung von Gleitschleiferei-Abwasser Dosierung: 300 g erfindungsgemäßes Mittel in Granulatform / m³ während der Hydroxidfällung (aktuelle Grenzwerte sind als Vergleich gegeben) (Beispiel 3)

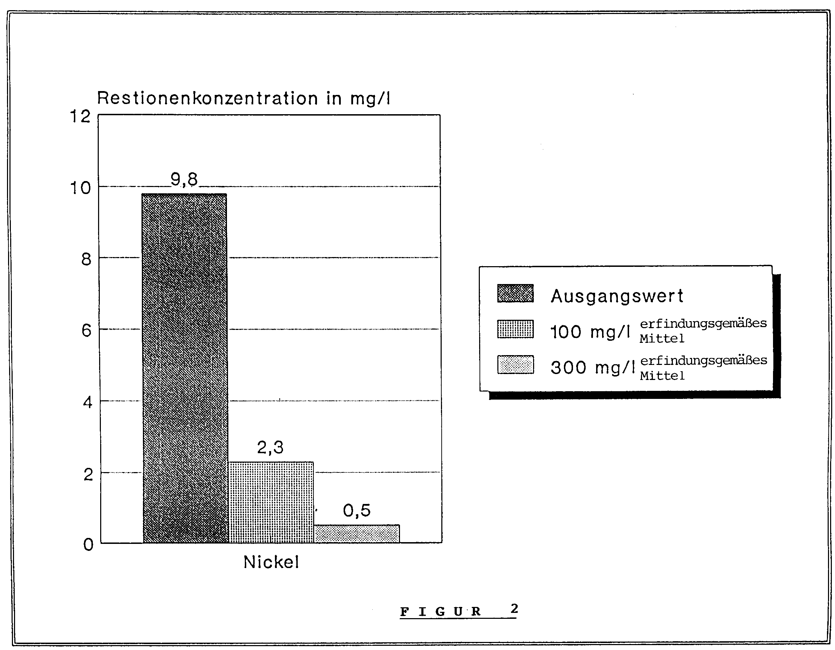

- Figur 2:: Reduktion des Ni²⁺-Gehalts auf den Grenzwert in einem Abwasser (Durchflußanlage) aus einem Glavanikbetrieb
Zugabe des erfindungsgemäßen Mittels in Pulverform während der Hydroxidfällung (Beispiel 4)

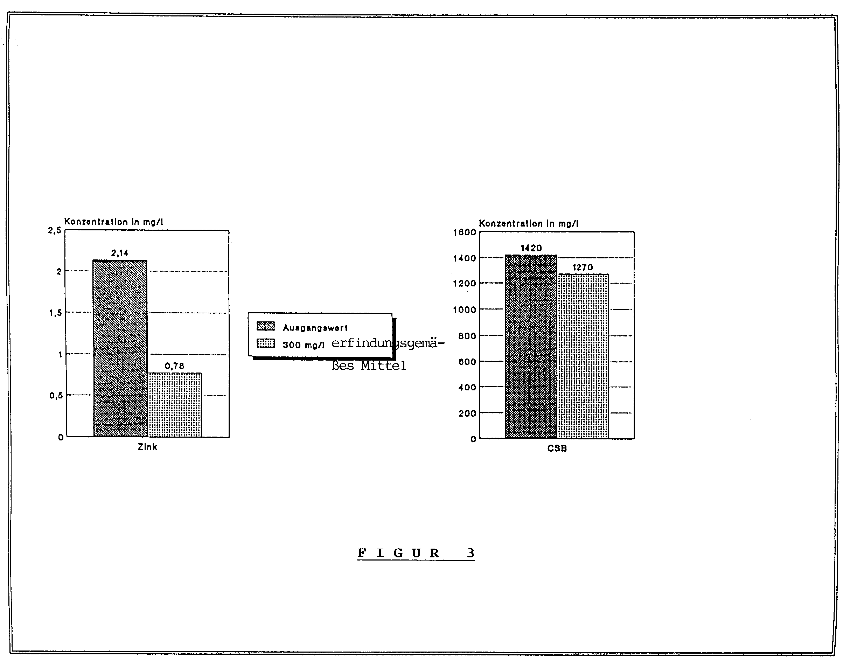

- Figur 3:: Zn²⁺- und CSB-Reduktion in Abwasser einer Verzinkerei
Dosierung: 300 g erfindungsgemäßes Mittel in Granulatform / m³ (Beispiel 5)
Neben den so erreichten niedrigen Schwermetall- bzw. CSB-Werten wird die Flockung und Sedimentation der Hydroxide deutlich besser. Auch die Verpreßbarkeit der Schlämme wird positiv beeinflußt.

## Patentansprüche

1. Fäll- und Flockungsmittel, welches die folgende Zusammensetzung aufweist:
| | |
|---|---|
| Zeolith A | 20 bis 80 Gew.-% |
| Kieselgur | 5 bis 40 Gew.-% |
| Aluminiumsulfat | 5 bis 50 Gew.-% |
| Bentonit | 0 bis 30 Gew.-% |
| Feststoffpolymer | 0 bis 10 Gew.-% |

2. Verfahren zur Herstellung des Fäll- und Flockungsmittels gemäß Anspruch 1, dadurch gekennzeichnet, daß man die Komponenten Zeolith A, Kieselgur, Aluminiumsulfat und gegebenenfalls Bentonit und Feststoffpolymer miteinander trocken vermischt und gegebenenfalls trocken verpreßt.

3. Verwendung des Fäll- und Flockungsmittels gemäß Anspruch 1 zum Entfernen von Schwermetallionen aus den Abwässern der oberflächenverarbeitenden Industrie.
